Europäisches Patentamt

European Patent Office

Office européen des brevets

(11) Publication number: **0 658 396 A1**

# EUROPEAN PATENT APPLICATION

(21) Application number: **94118220.6**

(22) Date of filing: **18.11.94**

(51) Int. Cl.⁶: **B23K 35/30**

(30) Priority: **19.11.93 JP 312774/93**

(43) Date of publication of application:
**21.06.95 Bulletin 95/25**

(84) Designated Contracting States:
**DE FR IT NL**

(71) Applicant: **THE JAPAN STEEL WORKS, LTD.**
**1-2, Yurakucho-1-chome, Chiyoda-ku**
**Tokyo100 (JP)**

(72) Inventor: **Kimura, Kimitoshi, c/o The Japan**
**Steel Works, Ltd.**
**4, Chatsu-machi,**
**Muroran**
**Hokkaido (JP)**

(74) Representative: **Patentanwälte Grünecker,**
**Kinkeldey, Stockmair & Partner**
**Maximilianstrasse 58**
**D-80538 München (DE)**

(54) Welding austenitic stainless steel materials having improved resistance to hydrogen embrittlement.

(57) A welding austenitic steel material is selected from among 18 Cr-8 Ni austenitic stainless steel, Mo containing 18 Cr-8 Ni austenitic stainless steel and 18 Cr-8 Ni austenitic stainless steel containing either Nb or Ti or both, characterized in that the permissible content of Si as an incidental impurity is restricted to no more than 0.1%.

EP 0 658 396 A1

Rank Xerox (UK) Business Services
(3.10/3.09/3.3.4)

## BACKGROUND OF THE INVENTION

### Field of the invention

The present invention relates to welding austenitic stainless steel materials that are sufficiently resistant to hydrogen embrittlement so that they will undergo only limited hydrogen embrittlement even if they are used in oil refining and other sectors of chemical industry where exposure to hydrogen occurs very frequently.

### Related Art

Weld overlay metals comprising austenitic stainless steels that are used in oil refining and other sectors of chemical industry are so set for composition and welding conditions that δ-ferrite is deliberately contained in amounts of 3 to 10% with a view to preventing hot cracking. The upper limit is specified at 10% in consideration of two facts: the ductility of the austenitic stainless steels decrease with the increasing content of the δ-ferrite, and it drops further in the presence of hydrogen absorbed during the operation ofe equipment.

After the weld overlay of the δ-ferrite containing austenitic stainless steels, a heat treatment is given in order to soften the heat-affected zone of the base metal and to reduce the residual stress in it. However, if 3% or more of the δ-ferrite content transforms to the sigma-phase during the post heat treatment, the ductility of the austenitic stainless steel with hydrogen retained in it will drop so markedly as to cause hydrogen embrittlement and cracking is initiated in internal attachments, gasket grooves and other areas where the stress is concentrated.

To deal with this problem, various methods have been attempted, such as by increasing the radii of corners in the stress-concentrated areas so as to disperse the latter or by omitting the heat treatment that is conventionally conducted after overlay the final weld metal layer. However, these prior art methods have a serious limitation in that the working schedule is prolonged to lower the operational efficiency.

## SUMMARY OF THE INVENTION

The present invention has been accomplished under these circumstances and has as the primary object providing a welding austenitic stainless steel material that has its resistance to hydrogen embrittlement improved by suppressing the transformation to the sigma-phase in the steel material.

The present invention attains the above-stated object by welding austenitic stainless steel material that contains, on a weight basis, up to 0.12% C, 1 to 2.5 % Mn, 9 to 15% Ni and 18 to 25% Cr, with the balance being Fe and incidental impurities. The permissible content of Si as an incidental impurity is restricted to no more than 0.1%.

In one embodiment, the welding austenitic stainless steel material further contains 2 to 4% Mo on a weight basis.

In another embodiment, the welding austenitic stainless steel material further contains, on a weight basis, either (9 × %C) to 1% Ti or (10 × %C) to 1% Nb or both, where C is the carbon content.

The austenitic stainless steel material encompassed by the invention is generally represented by a compostion that embraces 18 Cr-8 Ni austenitic stainless steels, Mo containing 18 Cr-8 Ni austenitic stainless steels, and Nb and/or Ti containing 18 Cr-8 Ni austenitic stainless steels.

According to the invention, the Si content of the welding austenitic stainless steel material is adjusted to be no more than 0.1 wt% and, as a result, the time at which the transformation of δ-ferrite to the sigma phase starts is effectively delayed to such an extent that the transformation to the sigma-phase is substantially suppressed. This effectively prevents the drop in ductility due to sigma-phase formation and, hence, sigma embrittlement which would otherwise occur in the prior art after post-welding heat treatment can be prevented. Consequently, the resistance of the welding stainless steel material against hydrogen embrittlement is markedly improved to such an extent that one can effectively prevent the development of cracks in stress-concentrated areas such as internal attachments and gasket groove corners.

## DETAILED DESCRIPTION OF THE PREFERRED EMBODIMENTS

Austenitic stainless steels having the composition shown in Table 1 were melted in a vacuum induction heating furnace to make ingots each weighing 25 kg. The ingots were forged and subjected to a solid solution treatment. The thusly treated products were given a heat input by TIG in the absence of filler metals so that their surfaces were melted rapidly and subsequently solidified to prepare invention and comparative samples (as welded) that had the same thermal history as buildup weld metals. All comparative samples had Si contents in excess of 0.1%.

The two groups of samples were subjected to a post-welding heat treatment at three different temperatures, 690°C, 695°C and 720°C, to prepare post heat treated samples. The post welding heat treatment was continued at each test temperature until 2% of the $\delta$-ferrite in the test samples transformed to the sigma-phase. The test results are shown in Table 2 in terms of the retention time to the sigma-phase transformation.

The measurement of the content of $\delta$-ferrite in the as-welded and post heat treated samples was preformed by magnetic quantitation with a ferrite meter, and the amount of sigma-phase transformation that occurred in each post heat treated sample was calculated by the following formula:

Sigma-phase transformation = (the amount of $\delta$-ferrite in as-welded sample) - (the amount of $\delta$-ferrite in post heat treated sample)

Table 1

| Sample No. | Composition, wt% | | | | | | | |
|---|---|---|---|---|---|---|---|---|
| | Si | C | Mn | Ni | Cr | Mo | Ti | Nb |
| Invention 1 | 0.01 | 0.031 | 2.04 | 10.98 | 21.26 | - | - | - |
| 2 | 0.01 | 0.008 | 2.28 | 12.80 | 18.82 | 2.84 | - | - |
| 3 | 0.01 | 0.016 | 1.73 | 10.12 | 20.06 | - | - | 0.56 |
| 4 | 0.01 | 0.017 | 1.68 | 10.08 | 19.54 | - | 0.51 | - |
| 5 | 0.01 | 0.014 | 1.74 | 10.21 | 19.31 | - | 0.43 | 0.50 |
| Comparison 6 | 0.54 | 0.022 | 1.87 | 10.88 | 20.95 | - | - | - |
| 7 | 0.52 | 0.010 | 2.01 | 12.75 | 18.80 | 2.76 | - | - |
| 8 | 0.55 | 0.015 | 1.75 | 10.10 | 19.98 | - | - | 0.55 |
| 9 | 0.56 | 0.013 | 1.70 | 10.10 | 19.52 | - | 0.53 | - |
| 10 | 0.51 | 0.012 | 1.69 | 10.25 | 19.26 | - | 0.46 | 0.52 |

Table 2

| Time (h) to the start of 2% sigma-phase transformation | | | |
|---|---|---|---|
| Sample No. | Temperature for post welding heat treatment | | |
| | 690°C | 695°C | 720°C |
| Invention 1 | 300 | 240 | 180 |
| 2 | 190 | 170 | 105 |
| 3 | 150 | 130 | 90 |
| 4 | 150 | 130 | 90 |
| 5 | 130 | 105 | 70 |
| Comparison 6 | 10 | 8 | 7 |
| 7 | 8 | 7 | 4.5 |
| 8 | 7 | 6 | 4 |
| 9 | 7 | 6 | 4 |
| 10 | 6 | 5 | 3 |

As is clear from Table 2, the invention samples took very long periods for 2% of the $\delta$-ferrite to be transformed to the sigma-phase; in other words, the transformation to the sigma-phase was substantially suppressed.

The three steel species that are representative as materials to construct pressure vessels for use in oil refining are listed below together with the standard conditions for their post welding heat treatment:

| 2.25 Cr-1 Mo-V steel | held at 720 ° C for 10 to 20 h |
| 3 Cr-1 Mo-V steel | held at 695 ° C for 10 to 20 h |
| 2.25 Cr-1 Mo steel | held at 690 ° C for 10 to 20 h |

As one can see from these data, the invention samples that were subjected to post welding heat treatments under the standard conditions would undergo only limited progress in the sigma-phase transformation and there was no likelihood for embrittlement by the sigma-phase. Thus, the invention samples were given a reasonable tolerance for hydrogen embrittlement.

On the other hand, the comparative samples experienced 2% transformation to the sigma-phase in the early period and, obviously, the transformation will progress to a marked extent if they are subjected to post welding heat treatments under the standard conditions. Thus, the comparative samples have a very high potential for hydrogen embrittlement.

As described on the foregoing pages, the welding austenitic stainless steel material of the present invention is characterized by reducing the permissible content of Si as an incidental impurity to 0.1% or less. This contributes to effective suppression of transformation to the sigma-phase and the hydrogen embrittlement due to the sigma-phase is prevented, thereby achieving a marked improvement in the resistance of the austenitic stainless steel material against hydrogen embrittlement. As a result, the occurrence of cracking in stress-concentrated areas is effectively prevented to improve the reliability of machinery having overlay weld metal parts of austenitic stainless steels.

**Claims**

1. A welding austenitic stainless steel material comprising, on a weight basis, 0.12% C or less, 1 to 2.5% Mn, 9 to 15% Ni and 18 to 25% Cr, with the balance being Fe and incidental impurities, a permissible content of Si as an incidental impurity being restricted to no more than 0.1%.

2. A welding austenitic stainless steel material according to claim 1 further comprising 2 to 4% Mo on a weight basis.

3. A welding austenitic stainless steel material according to claim 1 further comprising, on a weight basis, at least one of $(9 \times \%C)$ to 1% Ti and $(10 \times \%C)$ to 1% Nb, where C is the carbon content.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 092 621 (KAWASAKI STEEL CORPORATION)<br>* claims; examples 1-3; table 2 *<br>--- | 1-3 | B23K35/30 |
| X | WELDING JOURNAL.,<br>vol.65, no.6, June 1986, MIAMI US<br>pages 156S - 162S<br>R.L. KLUEH ET AL 'Chemical Composition Effects on the Creep of Type 316 and 16-8-2 Stainless Steel Weld Metal'<br>* tables 1,3 *<br>--- | 1-3 | |
| X | WELDING JOURNAL.,<br>vol.65, no.1, January 1986, MIAMI US<br>pages 1S - 7S<br>R.L. KLUEH ET AL 'Chemical Composition Effects onthe Creep Strenght of Type 308 Stainless Steel Weld Metal'<br>* table 1 *<br>--- | 1 | |
| A | US-A-4 431 447 (W. R. SCHICK)<br>--- | | TECHNICAL FIELDS SEARCHED (Int.Cl.6) |
| A | US-A-3 537 846 (L.E. RICK ET AL)<br>--- | | B23K |
| A | PATENT ABSTRACTS OF JAPAN<br>vol. 14, no. 30 (C-678) 19 January 1990<br>& JP-A-01 268 848 (HITACHI) 26 October 1989<br>* abstract *<br>----- | | |

The present search report has been drawn up for all claims

| Place of search | Date of completion of the search | Examiner |
|---|---|---|
| THE HAGUE | 6 March 1995 | Mollet, G |

EPO FORM 1503 03.82 (P04C01)